# EUROPÄISCHE PATENTSCHRIFT

(11) **EP 0 716 270 B1**
(45) Veröffentlichungstag und Bekanntmachung des Hinweises auf die Patenterteilung: **19.07.2000**
(21) Anmeldenummer: 95116430.0
(22) Anmeldetag: 18.10.1995
(51) Int. Cl.: F24C 15/10

(54) **Glaskeramik-Kochfeld**
Glass-ceramic cooking zone
Plaque de cuisson au vitrocérame

(30) Priorität: 04.11.1994 DE 4439405; 19.07.1995 DE 19526117
(43) Veröffentlichungstag der Anmeldung: 12.06.1996
(73) Patentinhaber: BSH Bosch und Siemens Hausgeräte GmbH, 81669 München (DE)
(72) Erfinder: Brandl, Georg, Dipl.-Ing. (FH), D-83349 Palling (DE); Henry, Karlheinz, Dipl.-Ing., D-83308 Trostberg (DE)

(56) Entgegenhaltungen:
- DE-A- 3 433 880
- DE-A- 3 600 109

## Beschreibung

Die vorliegende Erfindung betrifft eine Kochfläche aus Glaskeramik gemäß dem Oberbegriff des Anspruches 1.

Eine derartige Kochfläche ist bekannt aus der Druckschrift DE 34 33 880 A1, wobei eine Kochmulde mit einer Muldenplatte aus glaskeramischem Material und auf der Muldenplatte im Bereich von begrenzten Kochzonen angeordnete Heizkörper aufweist. Dabei trägt die Muldenplatte an der Oberseite eine aufgedruckte Dekorbeschichtung oder Kaschierung. Um die Entfernung eingebrannter Substanzen an der Glaskeramikoberfläche zu erleichtern, ist die Muldenplatte im wesentlichen vollständig mit der Dekorbeschichtung überzogen mit Ausnahme eines dekorfreien Randbereiches, der sich anschließt an die vom Heizkörper unmittelbar beheizte Kochzone.

*Weiter ist* bekannt *die Druckschrift* EP 0 231 529 B1, wobei das Problem der hohen Kratzempfindlichkeit und der guten Sichtbarkeit von Kratzern auf der Glaskeramik-Oberseite und das Abreiben der auf der Kochfläche aus Glaskeramik aufgebrachten Dekorfarbe dadurch gelöst werden soll, daß bestimmte statistisch verteilte Oberflächenbereiche der Glaskeramik relativ zu ihrer Umgebung - Glaskeramikoberfläche oder Dekoroberfläche - überhöht sind. So haben Kratzer verursachende Gegenstände, wie beispielsweise Töpfe, nur noch mit den Überhöhungen unmittelbaren Kontakt und führen allenfalls dort zum Abrieb, während der übrige Bereich der Oberseite der Kochfläche bzw. das kratzempfindliche Dekor unbelastet und damit unzerstört bleibt. Durch eine geeignete Wahl der Geometrie der Überhöhungen und/oder durch deren Farbgebungen fallen evtl. Verkratzungen wesentlich weniger auf als auf einer glatten Kochfläche. Diese Überhöhungen werden bei der Formgebung der Kochplatte durch Anwendung entsprechend ausgebildeter Walzen oder dadurch erzeugt, daß geeignete Dekorfarben oder Emailflüsse auf die Kochfläche aufgebracht und ggf. eingebrannt werden. Nachteilig dabei ist, daß kleine Körper, beispielsweise Staubkörner, die sich zwischen der Glaskeramik-Kochfläche und einem darauf abgestellten Topf befinden, die Glaskeramik beim Verschieben des Topfes weiterhin großflächig verkratzen können.

Aufgabe der vorliegenden Erfindung ist es deshalb, eine Kochfläche aus Glaskeramik bereitzustellen, bei der der Schutz vor Verkratzen weiter verbessert ist.

Erfindungsgemäß wird dies durch die Merkmale des Anspruches 1 erreicht. Durch die die Glaskeramik geschlossen bzw. möglichst geschlossen bedeckende Schutzschicht aus eingebrannten Emailflüssen oder einer hochkratzfesten Silikatbeschichtung mit einer im Vergleich zur Glaskeramik erhöhten Kratzfestigkeit ist das Verkratzen der Glaskeramik-Oberfläche nahezu ausgeschlossen. Diese Materialien sind im Zusammenhang mit Glaskeramik-Kochflächen erprobt und besonders geeignet. Der Bedeckungsgrad und die gegebenenfalls vorhandene Beabstandung der einzelnen Schutzschicht-Teilflächen sind insbesondere durch die thermischen Längenausdehnungseigenschaften des Schutzschicht- und des Glaskeramikmaterials gegeben. Alle auf der Kochfläche befindlichen Gegenstände, wie Staub, Putzmittel oder Töpfe sind im wesentlichen mit der erfindungsgemäßen Schutzschicht in Kontakt. Insbesondere ist auf die Schutzschicht bzw. die Glaskeramikoberfläche zur Kennzeichung der Kochzonen bzw. zur designerischen Gestaltung der Kochfläche ein Dekor aufgedruckt.

Vorteilhafterweise besteht die Schutzschicht aus dunklem Material, wodurch Fehlerstellen in der Glaskeramik, beispielsweise Blasen oder Schieren überdeckt werden. Somit können auch Glaskeramik-Kochflächen verwendet werden, die bisher aufgrund ihrer Fehler als Ausschuß wieder einzuschmelzen waren. Zusätzlich könnte bei Kochflächen, die zur Vermeidung des Einblicks unter die Glaskeramik-Kochfläche bei Auflicht mit einer zusätzlichen, auf der Glaskeramik-Unterseite aufgebrachten Abdeckschicht versehen sind, die Abdechschicht eingespart werden. Besonders vorteilhaft ist zudem, daß die Schutzschicht als solche aufgrund der Farbgebung für den Betrachter kaum sichtbar ist.

Zur Verbesserung der Haftung der Schutzschicht an der Glaskeramik-Oberfläche und zur Verringerung der Abplatzneigung der Schutzschicht ist die Oberseitenschicht der GlaskeramikKochfläche aufgerauht. Dies kann bei der Formgebung der Glasplatte oder nachträglich, beispielsweise durch Lasertechnik realisiert sein. Die aufgebrachten Dekorfarben oder Emailflüsse werden vor der Auslieferung ggf. auf eine der Glaskeramik-Oberfläche entsprechende mittlere Rauhtiefe geglättet bzw. poliert.

Nachfolgend sind anhand schematischer Darstellungen drei Ausführungsbeispiele der erfindungsgemäßen Kochfläche aus Glaskeramik beschrieben. Es zeigen:
- Fig. 1: in einer nicht maßstäblichen Querschnittdarstellung ausschnittsweise die beschichtete Kochfläche gemäß dem ersten Ausführungsbeispiel und
- Fig. 2: in einer nicht maßstäblichen Querschnittdarstellung ausschnittsweise die beschichtete Kochfläche gemäß dem zweiten Ausführungsbeispiel,
- Fig. 3: in einer nicht maßstäblichen Querschnittdarstellung ausschnittsweise die beschichtete Kochfläche gemäß dem dritten Ausführungsbeispiel.

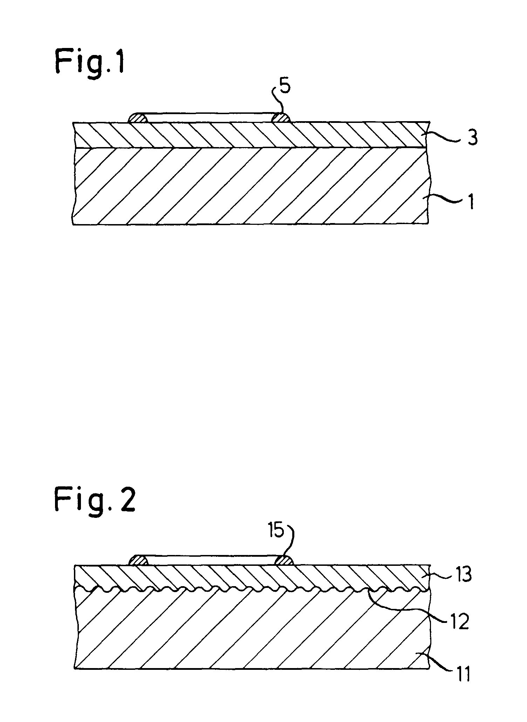

In Figur 1 ist eine an sich vorbekannte Glaskeramik-Kochfläche 1 gezeigt. Diese ist an ihrer gesamten Oberseite mit einer geeigneten, eingebrannten, eine geschlossene Schutzschicht 3 bildenden, schwarzen oder transparenten Dekorfarbe bedruckt. Die Temperatur-Ausdehnungsverhalten der beiden Materialien sind dabei genau aufeinander abgestimmt. Die Schutzschicht 3 versiegelt die Oberfläche der Glaskeramik-Kochfläche 1 vollständig und ist ihrerseits auf der dem Bediener zugewandten Oberfläche mit einem ringförmigen Dekor 5 bedruckt. Dieses markiert eine entsprechende Kochzone.

Gemäß dem zweiten Ausführungsbeispiel nach Fig. 2 weist eine Glaskeramik-Kochfläche 11 eine aufgerauhte Glaskeramik-Oberflächenschicht 12 auf, auf die ein hochkratzfester Emailfluß 13 aufgebracht ist. Bei einer ausreichenden Temperaturbeständigkeit weist dieser Emailfluß, entsprechend der Dekorfarbe des ersten Ausführungsbeispiels, eine höhere Kratzfestigkeit als die Glaskeramik 11 und weiterhin ein ähnliches Temperatur-Ausdehnungsverhalten wie Glaskeramik auf. Auch die Schutzschicht 13 ist zur Dekoration mit einem Dekor 15 bedruckt.

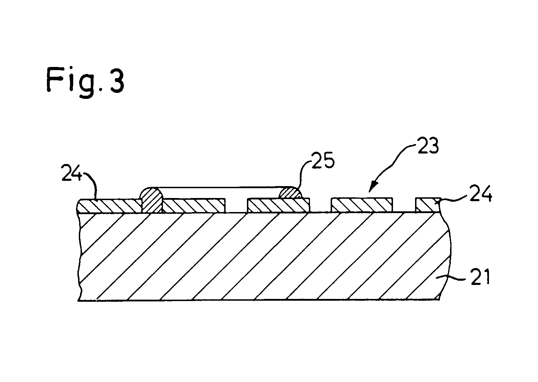

Gemäß dem dritten Ausführungsbeispiel nach Fig. 3 ist auf eine Glaskeramik-Kochfläche 21 eine unterbrochene dunkle Schutzschicht 23 aufgebracht. Diese ist durch einzelne, voneinander beabstandete Schutzschicht-Teilflächen 24 gebildet. Die Glaskeramik-Kochfläche21 bzw. die Schutzschicht-Teilflächen 24 sind zur Dekoration mit einem Dekor 25 bedruckt.

## Patentansprüche

1. Kochfläche aus Glaskeramik, auf deren Oberseite ein Dekor vorgesehen ist, **dadurch gekennzeichnet, daß** eine Schutzschicht (3, 13, 23) durch eine Emailflüsse- oder Silikatbeschichtung mit einer gegenüber der Glaskeramik (1, 11, 21) erhöhten Kratzfestigkeit gebildet ist und die Glaskeramik (1, 11, 21) geschlossen bzw. möglichst geschlossen bedeckt, und daß auf diese Schutzschicht (3, 13, 23) bzw. die Glaskeramik (21) ein Dekor (5, 15, 25) aufgedruckt ist.

2. Kochfläche nach Anspruch 1 **dadurch gekennzeichnet, daß** die Schutzschicht (3, 13, 23) aus dunklem Material besteht.

3. Kochfläche nach Anspruch 1 oder 2, **dadurch gekennzeichnet, daß** eine von der aufgebrachten Schutzschicht (13) bedeckte Oberseitenschicht (12) der Glaskeramik (11) aufgerauht ist.

## Claims

1. Cooking surface of glass ceramic, on the upper side of which a decoration is provided, characterised in that a protective layer (3, 13, 22) is formed by an enamel melt coating or silicate coating with an increased scratch resistance relative to the glass ceramic (1, 11, 21) and covers the glass ceramic (1, 11, 21) to be closed or closed as far as possible, and that a decoration (5, 15, 25) is printed on this protective layer (3, 13, 23) or the glass ceramic (21).

2. Cooking surface according to claim 1, characterised in that the protective layer (3, 13, 23) consists of dark material.

3. Cooking surface according to claim 1 or 2, characterised in that an upper surface layer (12), which is covered by the applied protective layer (13), of the glass ceramic (11) is roughened.

## Revendications

1. Surface de cuisson en vitrocéramique, sur la face supérieure de laquelle est prévu un décor, caractérisée en ce qu'une couche de protection (3, 13, 23) est formée par flux d'émaux ou revêtement de silicate avec une résistance aux griffures plus élevée que la vitrocéramique (1, 11, 21) et la vitrocéramique (1, 11, 21) est recouverte de manière fermée resp. pratiquement fermée, et en ce que sur cette couche de protection (3, 13, 23) resp. la vitrocéramique (21) est imprimé un décor (5, 15, 25).

2. Surface de cuisson selon la revendication 1, caractérisée en ce que la couche de protection (3, 13, 23) est constituée d'un matériau sombre.

3. Surface de cuisson selon la revendication 1 ou 2, caractérisée en ce qu'une couche de face supérieure (12) de la vitrocéramique (11) recouverte de la couche de protection (13) appliquée est rendue rugueuse.
